# EUROPEAN PATENT SPECIFICATION

(11) **EP 1 032 222 B1**
(45) Date of publication and mention of the grant of the patent: **27.10.2004**
(21) Application number: 00301394.3
(22) Date of filing: 22.02.2000
(51) Int. Cl.: H04N 9/83

(54) **Apparatus and method of reproducing wide-band mode video signal**
Anlage und Verfahren zur Wiedergabe eines breitbandigen Videosignals
Appareil et procédé pour reproduire un signal vidéo à large bande

(30) Priority: 26.02.1999 JP 5019799
(43) Date of publication of application: 30.08.2000
(73) Proprietor: VICTOR COMPANY OF JAPAN LIMITED, Yokohama-Shi Kanagawa-Ken (JP)
(72) Inventor: Muroya, Tsuyoshi, Yokohama-shi, Kanagawa-ken (JP); Ishii, Kanju, Yokohama-shi, Kanagawa-ken (JP)
(74) Representative: Crawford, Andrew Birkby

(56) References cited:
- EP-A- 0 669 770

## Description

### BACKGROUND OF THE INVENTION

The present invention relates to reproduction of video signals. Particularly, this invention relates to reproduction of video signals recorded in a narrow-band mode (standard mode, such as VHS format mode) and also video signals recorded in a wide-band mode (high definition mode, such as S-VHS format mode) according to the PAL (Phase-Alternation Line) system.

There are two types of helical scanning-type magnetic recording and reproducing apparatus (called VTR hereinafter) using 1/2 inch-wide magnetic tapes. One is narrow-band mode VTR according to the VHS system (trademark). The other type is wide-band mode VTR according to the S-VHS system (trademark).

In a narrow-band mode, the luminance carrier frequency is lower than the chrominance subcarrier. On the other hand, the luminance carrier frequency is higher than the chrominance subcarrier fsc in a wide-band mode.

More detail, in a VTR of the standard VHS (standard mode), a video signal to be recorded is separated into luminance and chrominance (color) signals. The luminance signal is modulated into an FM (frequency modulated) luminance signal having a frequency deviation of 3.4 to 4.4 MHz. The chrominance signals are down-converted into a low frequency band around 629 kHz. The FM modulated luminance signal and the Frequency-down-converted chrominance signals are combined before being recorded on a magnetic tape.

In a VTR of the S-VHS (high definition mode), a video signal to be recorded is separated into luminance and chrominance signals. The luminance signal is modulated into an FM (frequency modulated) luminance signal having a frequency deviation of 5.4 to 7.0 MHz. The chrominance signals are down-converted into a low frequency band around 629 kHz. The FM modulated luminance signal and the frequency-down-converted chrominance signals are combined before being recorded on a magnetic type.

Recording PAL video signals by a wide-band mode VTR requires a pilot burst signal for each horizontal blanking period in the frequency-down-converted chrominance signal. The pilot burst signal indicates the status of a PAL video signal, such as, image quality, according to the S-VHS625 standards.

In detail, in case of the S-VHS format PAL video signal recording, the pilot burst signal is used for recording PAL video signals with conversion of the luminance signal band into a band, such as, about 5 MHz, over the chrominance subcarrier signal fsc. The pilot burst signal is a burst signal of, for example, fsc = 4. 43 MHz, for PAL video signal recording according to Japanese Unexamined Patent Publication No. JP-A-1049395.

Document EP-A-0669770 describes an apparatus for reproducing video signals recorded in VHS or S-VHS mode, comprising a judging section to judge whether the video signals have been recorded in VHS or S-VHS, based on the pilot burst availabilitates.

On the other hand, recording PAL video signals in the narrow-band mode (standard mode, such as VHS format mode) does not require such a pilot burst signal.

Narrow-band mode VTRs, such as VHS-ET (Expansion Technology) VTRs, for reproducing NTSC (National Television System Committee) video signals recorded in the wide-band mode (high definition mode, such as S-VHS format mode) have been developed.

On the other hand, narrow-band mode VTRs for reproducing PAL video signals recorded in the wide-band mode have not been developed.

This is because reproduction of PAL signals with pilot burst signals causes malfunction of a clump circuit on a TV set. This results in disturbance in reproduced video. The clump circuit of recording side VTR would also malfunction during dubbing. This results in unsatisfactory recording.

### SUMMARY OF THE INVENTION

A purpose of the present invention is to provide an apparatus and a method, based on narrow-band mode, of reproduction of PAL video signals recorded in wide-band mode with no disturbance in reproduced video.

The present invention provides an apparatus for reproducing a video signal that has been recorded according to PAL (Phase-Alternation Line) system. The apparatus includes a luminance signal processor to process a luminance signal of the video signal; a chrominance signal processor to process a chrominance signal of the video signal; a judging section to judge whether the video signal has been recorded in a wide-band mode, a luminance carrier frequency being higher than a chrominance subcarrier in the wide-band mode; a canceller to cancel a pilot burst signal carried by the chrominance signal for each horizontal blanking period when the video signal is judged as recorded in the wide-band mode; and a reproducer to output a composite video signal on the basis of the processed luminance and chrominance signals.

Furthermore, the present invention provides a method of reproducing a video signal that has been recorded according to PAL (Phase-Alternation Line) system, the method. A luminance signal of the video signal is processed. A chrominance signal of the video signal is processed. It is judged whether the video signal has been recorded in a wide-band mode, a luminance carrier frequency being higher than a chrominance subcarrier in the wide-band mode. A pilot burst signal carried by the chrominance signal for each horizontal blanking period is canceled when the video signal is judged as recorded in the wide-band mode. A composite video signal is output on the basis of the processed luminance and chrominance signals.

### BRIEF DESCRIPTION OF DRAWINGS

FIG. 1 shows a block diagram of a wide-band mode recording apparatus;
FIG. 2 shows a block diagram of a preferred embodiment of a reproducing apparatus according to the present invention; and
FIG. 3 illustrates cancellation of pilot burst signals from a chrominance signal.

### DETAILED DESCRIPTION OF PREFERRED EMBODIMENTS

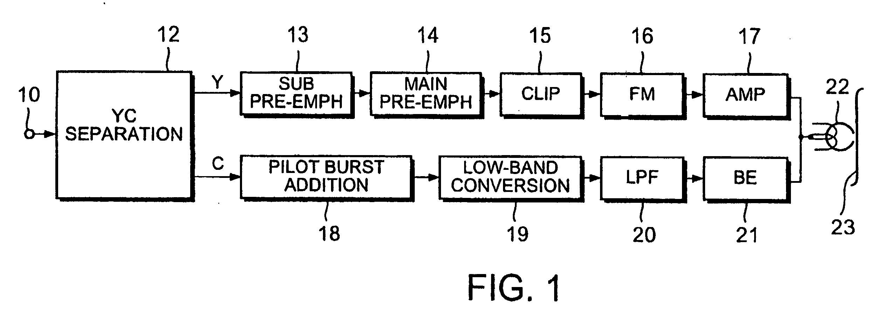

Before describing a preferred embodiment, recording a video signal which will then be reproduced according to the present invention is discussed with reference to FIG. 1.

FIG. 1 shows a block diagram of a wide-band mode (high definition mode, such as S-VHS format mode) recording apparatus (S-VHS VTR, for example) that records a high definition PAL video signal on a magnetic tape.

A composite PAL video signal supplied to the apparatus through an input terminal 10 is separated into a luminance signal Y and a chrominance signal C by a YC separator 12.

The luminance signal Y is applied the sub-emphasis characteristics by a sub pre-emphasizer (SUB PRE-EMPH) 13 and further applied the emphasis characteristics by a main pre-emphasizer (MAIN PRE-EMPH) 14 for emphasizing high frequency components of the signal Y.

The output of the main pre-emphasizer 14 is supplied to a clipper (CLIP) 15 for clipping signal components having the levels over a reference level.

The clipped signal is supplied to a frequency modulator (FM) 16 for frequency modulation (the FM modulated luminance signal having a frequency deviation of 5.4 to 7.0 MHz) and then amplified by an amplifier (AMP) 17, to be a FM-luminance signal for recording.

The chrominance signal C output by the YC separator 12 is added with a pilot burst signal by a pilot burst signal adder 18. The output of the adder 18 is converted into a low-band chrominance signal around 629 kHz by a low-band converter 19. Undesired signal components of the converted signal are removed by a low-pass filter (LPF) 20. The frequency-down-converted chrominance signal is then applied the burst emphasis characteristics by a burst-emphasizer (BE) 21.

The FM-luminance signal and the low-band frequency-converted chrominance signal having the burst emphasis characteristics are mixed with each other and recorded on a magnetic tape 23 by a magnetic head 22.

As described above, the luminance signal Y is applied the sub-emphasis characteristics in the wide-band mode recording; and hence, in wide-band mode reproduction, the luminance signal Y will be applied the sub-deemphasis characteristics.

On the other hand, narrow-band VTRs (standard VTRs, such as standard VHS format VTRs) do not apply the sub-emphasis characteristics to luminance signal. Such VTRs thus do not have a sub-deemphasizer.

The present invention then offers a reproducing apparatus having simply structured sub-deemphasis circuitry.

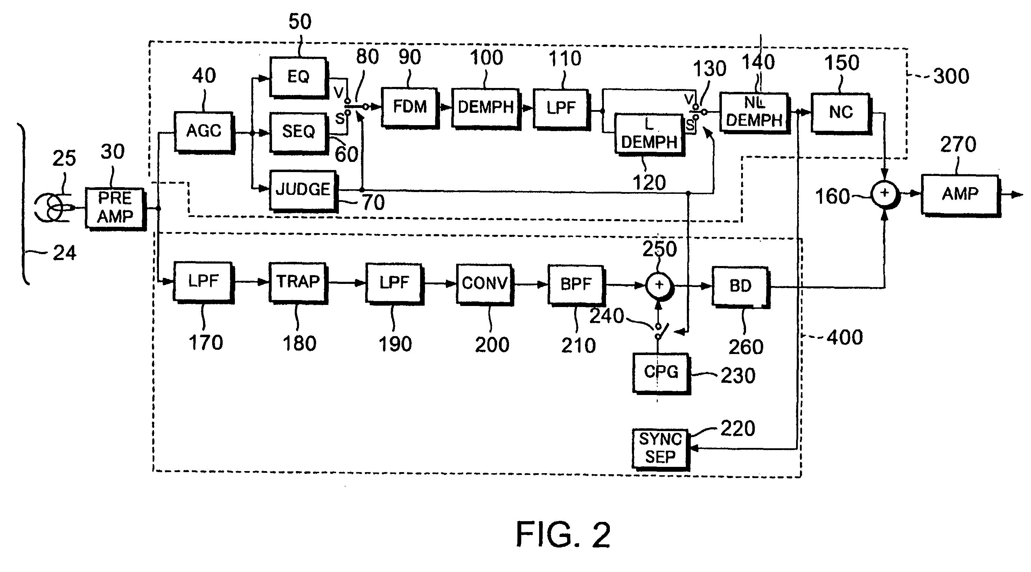

Shown in FIG.2 is a block diagram of a preferred embodiment of a reproducing apparatus for both the narrow- and wide-band modes according to the present invention.

One of the features of the present invention is that the sub-deemphasis circuitry consists of a linear deemphasizer (L DEMPH) 120 and a non-linear deemphasizer (NL DEMPH) 140. This circuitry is made on the basis of that fact that the sub-emphasis characteristics is composed of the linear and non-linear characteristics; and hence, the corresponding sub-deemphasis characteristics is also composed of the linear and non-linear characteristics.

The PAL video signal that has been recorded on the magnetic tape 24 in the wide-band mode as discussed with reference to FIG. 1 is reproduced as described below.

The reproduced RF PAL video signal is supplied to a preamplifier (PREAMP) 30 through a reproducing head 25, to be a RF (Radio Frequency) signal having a predetermined amplitude level.

The RF signal is processed by luminance signal circuitry 300 and also chrominance signal circuitry 400. The signal components processed by each of the circuitry 300 and 400 are added to each other by an adder 160, to be a composite reproduced PAL video signal. The composite video signal is then amplified by an amplifier (AMP) 270 and output from the reproducing apparatus.

Firstly, the luminance signal circuitry 300 is described.

The RF signal output by the preamplifier 30 is supplied to an automatic gain controller (AGC) 40 for giving a constant level to the envelope of the RF signal; and then supplied to an equalizer (EQ) 50, an S-equalizer (SEQ) 60 and a judging unit 70.

The judging unit 70 determines whether the RF signal has been recorded in the wide-band mode. In detail, the unit 70 detects the luminance carrier frequency that is 3.8 MHz for PAL VHS and 5.4 MHz for PAL S-VHS. When recording in the wide-band mode is detected, the unit 70 sends a switching signal to switches 80, 130 so that they are turned on to the "S" side. The switching signal is also sent to a switch 240 so that it is turned on.

The RF signal output by the automatic gain controller 40 is then supplied to a frequency demodulator (FDM) 90 through the S-equalizer 60. The S-equalizer 60 removes the lower-band converted chrominance signal components from the RF signal and adjusts the frequency characteristics of both the side-band signal components. The RF signal processed by the S-equalizer 60 is supplied to the frequency demodulator 90 and demodulated into a video (luminance) signal.

The demodulated signal is supplied to a deemphasizer (DEMPH) 100. The deemphasizer 100 applies the deemphasis characteristics to the demodulated signal. The deemphasis characteristics is the inverse of the emphasis characteristics applied by the main pre-emphasiser 14 in recording for emphasizing high frequency components in FIG. 1. The application of deemphasis characteristics reduces triangle wave noise components of the demodulated signal.

The noise-reduced signal is supplied to a low-pass filter (LPF) 110 for removing undesired signal components.

As disclosed above, in reproduction of a PAL video signal recorded in the wide-band mode, the mode is detected by the judging unit 70 to turn on the switch 130 to the "S" side, so that the output of the low-pass filter 110 is supplied to the linear deemphasizer (L DEMPH) 120.

The linear deemphasizer 120 applies the linear characteristics, that is the inverse of the linear characteristics of the sub-emphasis characteristics applied by the sub pre-emphasizer 13 (FIG. 1) in recording, to the output of the low-pass filter 110.

The output of the linear deemphasizer 120 is supplied to the non-linear deemphasizer 140 via switch 130 and applied the non-linear characteristics that is the inverse of the nonlinear characteristics of the sub-emphasis characteristics applied in recording.

As disclosed, according to the present invention, the sub-emphasis circuitry consists of the linear deemphasizer 120 and the non-linear deemphasizer 140 to apply the sub-deemphasis characteristics that is the inverse of the sub-emphasis characteristics applied in recording to the input PAL signal.

The luminance signal having the sub-emphasis characteristics is supplied to a noise canceller (NC) 150. After high frequency noise components are eliminated, the luminance signal is supplied to the adder 160.

Next, the chrominance signal circuitry 400 is described.

The RF signal output by the preamlifier 30 is supplied to a low-pass filter (LPF) 170, a trap 180 and another low-pass filter (LPF) 190, and undesired signal components of frequency-down-converted chrominance signals are eliminated.

The low-band converted chrominance signal is supplied to a converter (CONV) 200 and converted into a high-band (chrominance subcarrier signal frequency) converted chrominance signal which is then supplied to a band-pass filter (BPF) 210. The high-band converted chrominance signal (subcarrier frequency chrominance signal) is supplied to an adder 250 after undesired signal components are eliminated by the band-pass filter (BPF) 210.

The luminance signal output by the nonlinear deemphasizer 140 of the luminance signal circuitry 300 is supplied to a synchronizing signal separator (SYNC SEP) 220 of the chrominance signal circuitry 400. The reproduced luminance signal to be supplied to the separator 220 is a luminance signal without the sub-emphasis characteristics that have been applied in recording, or having the sub-deemphasis characteristics. This is a must, otherwise, a synchronizing signal which will be separated from the luminance signal would be an inaccurate signal.

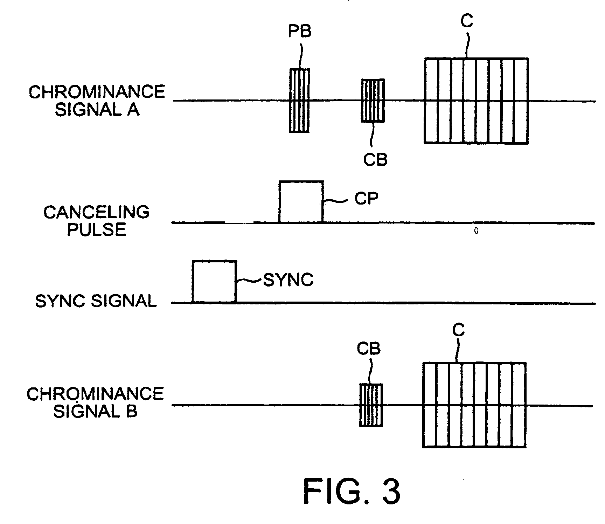

Signal processing conducted by the synchronizing signal separator 220, a canceling pulse generator 230 and the adder 250 is described with reference to FIG. 3.

A synchronizing signal SYNC is separated from the luminance signal by the synchronizing signal separator 220 and supplied to the canceling pulse generator 230. The generator 230 generates a canceling pulse CP on the basis of the synchronizing signal.

As already described, the switch 240 has been turned on by the switching signal from the judging unit 70 that has judged that the RF signal had been recorded in the wide-band mode.

The canceling pulse CP is then supplied to the adder 250 via switch 240, to which the high-band converted chrominance signal has been supplied from the band-pass filter 210.

The chrominance signal supplied to the adder 250 is shown in FIG. 3 as a chrominance signal A that includes a chrominance signal component C, a pilot burst signal PB and a color burst signal CB.

The pilot burst signal PB is canceled by addition of a zero-level DC signal while the canceling pulse CP is "HIGH". A chrominance signal B that includes the chrominance signal component C and the color burst signal CB without the pilot burst signal PB is then output by the adder 250.

The chrominance signal B is supplied to a burst deempahsizer (BD) 260 and applied the burst deemphasis characteristics which is the inverse of the burst emphasis characteristics applied by the burst emphasizer 21 (FIG. 1) in recording.

The adder 160 mixes the luminance signal from the noise canceller 150 and the chrominance signal from the burst deempahsizer 260. The output of the adder 160 is supplied to an amplifier (AMP) 270 and amplified at a predetermined level, to be an output reproduced composite video signal.

As described above, a PAL video signal that has been recorded in the wide-band mode can be reproduced by using the reproduction circuitry for narrow-band mode.

Described next is reproduction of a PAL video signal that has been recorded in the narrow-band mode (standard mode, such as VHS format mode).

For simplicity, the functions of the circuit components the same as for the PAL video signal recorded in the wide-band mode and described above is not descried in detail.

A reproduced RF PAL video signal recorded in the narrow-band mode is supplied to the judging unit 70 through the preamplifier 30 and automatic gain controller 40.

When recording in the narrow-band mode is detected, the judging unit 70 sends a switching signal to the switches 80 and 130 so that they are turned on to the "V" side. The switching signal is also supplied to the switch 240 so that it is turned off.

A RF signal output by the automatic gain controller 40 is supplied to the frequency demodulator 90 through the equalizer 50.

The equalizer 50 removes the lower-band converted chrominance signal components from the RF signal and adjusts the frequency characteristics of both the side-band signal components.

The RF signal processed by the equalizer 50 is further processed by the frequency demodulator 90, deemphasizer 100 and low-pass filter 110 and then supplied to the non-linear deemphasizer 140 via switch 130 with no processing by the linear deemphasizer 120.

The RF signal processed by the non-linear deemphasizer 140 is supplied to the adder 160 through the noise canceller 150.

The reproduced RF PAL video signal recorded in the narrow-band mode is also supplied to the low-pass filter 170 through the preamplifier 30 and the automatic gain controller 40.

The output of the low-pass filter 170 is supplied to the adder 250 through the trap 180, low-pass filter 190, converter 200 and band-pass filter 210.

The output of the band-pass filter 210 passes through the adder 250 as it is because the switch 240 is turned off for the PAL video signal which has been recorded with no pilot burst signal in the narrow-band mode.

The output of the adder 250 is processed by the burst de-emphasizer 260 and supplied to the adder 160.

The luminance signal from the noise canceller 150 and the chrominance signal from the burst deemphasizer 260 are added by the adder 160, to be a reproduced composite video signal. The composite video signal is output from the reproducing apparatus through the amplifier 270.

As disclosed above, the present invention achieves reproduction of PAL video signals recorded in the narrow-band mode by means of a non-linear deemphasizer and also reproduction of PAL video signals recorded in the wide-band mode by the combination of the non-linear deemphasizer and a linear deemphasizer.

Pilot burst signals carried by PAL video signals in the wide-band mode can be canceled by means of the result of processing by the judging unit, the canceling pulse generator and the adder. Cancellation of pilot burst signals achieves avoidance of disturbance in reproduced PAL video signals that have been recorded in the wide-band mode.

## Claims

1. An apparatus for reproducing a video signal that has been recorded according to PAL "Phase-Alternation Line" system, the apparatus comprising:
a luminance signal processor to process a luminance signal of the video signal;
a chrominance signal processor to process a chrominance signal of the video signal;
a judging section to judge whether the video signal has been recorded in a wide-band mode, a luminance carrier frequency being higher than a chrominance subcarrier in the wide-band mode;
a canceller to cancel a pilot burst signal carried by the chrominance signal for each horizontal blanking period when the video signal is judged as recorded in the wide-band mode; and
a reproducer to output a composite video signal on the basis of the processed luminance and chrominance signals.

2. The apparatus according to claim 1 wherein the judging section detects the luminance carrier frequency for judging whether the video signal has been recorded in the wide-band.

3. The apparatus according to claim 1 wherein the luminance signal processor includes a sub-deemphasis section that applies sub-deemphasis characteristics to the luminance signal, the sub-deemphasis characteristics being the inverse of sub-emphasis characteristics that has been applied to the luminance signal during recording of the video signal in the wide-band mode.

4. The apparatus according to claim 3 wherein the sub-deemphasis section includes a linear deemphasizer and a non-linear deemphasizer.

5. The apparatus according to claim 3, the canceller including:
a separator to separate a synchronizing signal from an output signal of the sub-deemphasis section; and
a generator to generate a canceling pulse on the basis of the synchronizing signal, the pilot burst signal being canceled by means of the canceling pulse.

6. A method of reproducing a video signal that has been recorded according to PAL "Phase-Alternation Line" system, the method comprising the steps of:
processing a luminance signal of the video signal;
processing a chrominance signal of the video signal;
judging whether the video signal has been recorded in a wide-band mode, a luminance carrier frequency being higher than a chrominance subcarrier in the wide-band mode;
canceling a pilot burst signal carried by the chrominance signal for each horizontal blanking period when the video signal is judged as recorded in the wide-band mode; and
outputting a composite video signal on the basis of the processed luminance and chrominance signals.

7. The method according to claim 6 wherein the judging step includes the step of detecting the luminance carrier frequency for judging whether the video signal has been recorded in the wide-band.

8. The method according to claim 6 wherein the luminance signal processing step includes the step of applying sub-deemphasis characteristics to the luminance signal, the sub-deemphasis characteristics being the inverse of sub-emphasis characteristics that has been applied to the luminance signal during recording of the video signal in the wide-band mode.

9. The method according to claim 8 wherein the sub-deemphasis characteristics applying step includes the step of applying linear and non-linear deemphasis characteristics to the luminance signal.

10. The method according to claim 8, the canceling step including the steps of:
separating a synchronizing signal from a result of application of the sub-deemphasis characteristics; and
generating a canceling pulse on the basis of the synchronizing signal, the pilot burst signal being canceled by means of the canceling pulse.

## Patentansprüche

1. Vorrichtung zur Wiedergabe eines Videosignals, das gemäß dem PAL "Phase Alternation Line"-System aufgezeichnet wurde, wobei die Vorrichtung aufweist:
einen Luminanz-Signalprozessor, um das Luminanzsignal des Videosignals zu verarbeiten;
einen Chrominanz-Signalprozessor, um das Chrominanzsignal des Videosignals zu verarbeiten;
einen Beurteilungs-Abschnitt, um zu beurteilen, ob das Videosignal in einem Breitband-Modus aufgezeichnet wurde, wobei in dem Breitband-Modus eine Luminanz-Trägerfrequenz höher ist als ein Chrominanz-Unterträger;
eine Löscheinrichtung, um ein Pilot-Bündelsignal zu löschen, das in dem Chrominanzsignal für jede horizontale Austastperiode enthalten ist, wenn das Videosignal als ein solches erkannt worden ist, das in dem Breitband-Modus aufgezeichnet ist; und
eine Wiedereingabeeinrichtung, um ein zusammengesetztes Videosignal auf der Basis der verarbeiteten Luminanzsignale und der Chrominanzsignale abzugeben.

2. Vorrichtung gemäß Anspruch 1, bei der der Beurteilungs-Abschnitt die Luminanz-Trägerfrequenz feststellt, zum Beurteilen, ob das Videosignal in einem Breitband-Modus aufgezeichnet wurde.

3. Vorrichtung gemäß Anspruch 1, bei der der Luminanz-Signalprozessor einen Unterabsenkungs-Abschnitt enthält, der Unterabsenkungs-Charakteristika auf das Luminanzsignal anwendet, wobei die Unterabsenkungs-Charakteristika das Inverse zu Unteranhebungs-Charakteristika sind, die auf das Luminanzsignal während Aufzeichnung des Videosignals in dem Breitband-Modus angewendet wurden.

4. Vorrichtung gemäß Anspruch 3, bei der der Unterabsenkungs-Abschnitt einen linearen Absenker und einen nichtlinearen Absenker einschließt.

5. Vorrichtung gemäß Anspruch 3, bei der die Löscheinrichtung enthält:
eine Trennvorrichtung, um ein Synchronisationssignal von einem Ausgangssignal des Unterabsenkungs-Abschnitts zu trennen; und einen Generator, um einen Löschpuls auf der Basis des Synchronisations-Signals zu bilden, wobei das Pilot-Bündelsignal mit Hilfe des Löschpulses gelöscht wird.

6. Verfahren zum Reproduzieren eines Videosignals, das gemäß dem PAL "Phase Alternation Line"-System aufgezeichnet wurde, wobei das Verfahren die folgenden Schritte aufweist:
Verarbeiten eines Luminanzsignals des Videosignals; Verarbeiten eines Chrominanzsignals des Videosignals; Beurteilen, ob das Videosignal in einem Breitband-Modus aufgezeichnet wurde, wobei in dem Breitband-Modus eine Luminanz-Trägerfrequenz höher ist als ein Chrominanz-Unterträger;
Löschen eines Pilot-Bündelsignals, das in dem Chrominanzsignal für jede horizontale Austastperiode enthalten ist, wenn das Videosignal als ein solches erkannt worden ist, das in dem Breitband-Modus aufgezeichnet ist; und
Abgeben eines zusammengesetzten Videosignals auf der Basis des verarbeiteten Luminanzsignals und des Chrominanzsignals.

7. Verfahren gemäß Anspruch 6, wobei der Beurteilungsschritt einen Schritt zum Erfassen der Luminanz-Trägerfrequenz einschließt zum Beurteilen, ob das Videosignal in dem Breitband-Modus aufgezeichnet wurde.

8. Verfahren gemäß Anspruch 6, bei dem der Luminanzsignal-Verarbeitungsschritt den Schritt des Anwendens von Unterabsenkungs-Charakteristika auf das Luminanzsignal einschließt, wobei die Unterabsenkungs-Charakteristika das Inverse zu Unteranhebungs-Charakteristika sind, die auf das Luminanzsignal während Aufzeichnung des Videosignals in dem Breitband-Modus angewendet wurden.

9. Verfahren gemäß Anspruch 8, bei der der Schritt der Anwendung der Unterabsenkungs-Charakteristika den Schritt des Anwendens linearer und nicht-linearer Unterabsenkungs-Charakteristika auf das Luminanzsignal einschließt.

10. Verfahren gemäß Anspruch 8, wobei der Löschschritt die folgenden Schritte einschließt:
Separieren eines Synchronisations-Signals von einem Anwendungsergebnis der Unterabsenkungs-Charakteristika; und
Bilden eines Löschpulses auf der Basis des Synchronisationssignals, wobei das Pilot-Bündelsignal mit Hilfe des Löschpulses gelöscht wird.

## Revendications

1. Appareil pour reproduire un signal vidéo qui a été enregistré selon le system PAL (système à ligne d'alternance de phase), l'appareil comprenant :
• un processeur de signal de luminance pour traiter un signal de luminance du signal vidéo ;
• un processeur de signal de chrominance pour traiter un signal de chrominance du signal vidéo ;
• une section d'évaluation pour évaluer si oui ou non le signal vidéo a été enregistré dans un mode large bande, une fréquence porteuse de luminance étant supérieure à une sous-porteuse de chrominance en mode large bande ;
• un annulateur pour annuler un signal de salve pilote porté par le signal de chrominance pour chaque période de suppression horizontale lorsque le signal vidéo est évalué comme enregistré en mode large bande ; et
• un reproducteur pour émettre un signal vidéo composite sur la base des signaux de chrominance et de luminance traités.

2. Appareil selon la revendication 1, dans lequel la section d'évaluation détecte la fréquence porteuse de luminance pour évaluer si oui ou non le signal vidéo a été enregistré en large bande.

3. Appareil selon la revendication 1, dans lequel le processeur de signaux de luminance comprend une section de sous-désaccentuation qui applique des caractéristiques de sous-désaccentuation au signal de luminance, les caractéristiques de sous-désaccentuation étant l'inverse des caractéristiques de sous-désaccentuation qui ont été appliquées au signal de luminance pendant l'enregistrement du signal vidéo en mode large bande.

4. Appareil selon la revendication 3, dans lequel la section de sous-désaccentuation comprend un désaccentuateur linéaire et un désaccentuateur non linéaire.

5. Appareil selon la revendication 3, l'annulateur comprenant :
• un séparateur pour séparer un signal de synchronisation d'un signal de sortie de la section de sous-désaccentuation ; et
• un générateur pour générer une impulsion d'annulation sur la base du signal de synchronisation, le signal de salve pilote étant annulé au moyen de l'impulsion d'annulation.

6. Méthode de reproduction d'un signal vidéo qui a été enregistré selon le système PAL (système à ligne d'alternance de phase), la méthode comprenant les étapes consistant à :
• traiter un signal de luminance du signal vidéo ;
• traiter un signal de chrominance du signal vidéo ;
• évaluer si oui ou non le signal vidéo a été enregistré dans un mode large bande, une fréquence porteuse de luminance étant supérieure à une sous-porteuse de chrominance en mode large bande ;
• annuler un signal de salve pilote porté par le signal de chrominance pour chaque période de suppression horizontale lorsque le signal vidéo est évalué comme enregistré en mode large bande ; et
• générer un signal vidéo composite sur la base des signaux de chrominance et de luminance traités.

7. Méthode selon la revendication 6, dans laquelle l'étape d'évaluation comprend l'étape consistant à détecter la fréquence porteuse de luminance pour évaluer si oui ou non le signal vidéo a été enregistré en large bande.

8. Méthode selon la revendication 6, dans laquelle l'étape de traitement du signal de luminance comprend l'étape consistant à appliquer des caractéristiques de sous-désaccentuation au signal de luminance, les caractéristiques de sous-désaccentuation étant l'inverse des caractéristiques de sous-accentuation qui ont été appliquées au signal de luminance pendant l'enregistrement du signal vidéo en mode large bande.

9. Méthode selon la revendication 8, dans laquelle l'étape d'application des caractéristiques de sous-désaccentuation comprend l'étape consistant à appliquer des caractéristiques de désaccentuation linéaire et non linéaire au signal de luminance.

10. Méthode selon la revendication 8, l'étape d'annulation comprenant les étapes consistant à :
• séparer un signal de synchronisation à partir d'un résultat d'application des caractéristiques de sous-désaccentuation ;
• générer une impulsion d'annulation sur la base du signal de synchronisation, le signal de salve pilote étant annulé au moyen de l'impulsion d'annulation.
